# EUROPÄISCHE PATENTSCHRIFT

(11) **EP 1 462 905 B1**
(45) Veröffentlichungstag und Bekanntmachung des Hinweises auf die Patenterteilung: **24.01.2007**
(21) Anmeldenummer: 04100445.8
(22) Anmeldetag: 06.02.2004
(51) Int. Cl.: G05G 1/10, G05G 1/08, B60H 1/00

(54) **Bedienelement mit mehreren Handhaben**
Control element having multiple handles
Elément de commande comprenant plusieurs poignées

(30) Priorität: 26.03.2003 DE 10313621
(43) Veröffentlichungstag der Anmeldung: 29.09.2004
(73) Patentinhaber: SIEMENS AKTIENGESELLSCHAFT, 80333 München (DE)
(72) Erfinder: Albayrak, Gökay, 63543 Neuberg (DE)

(56) Entgegenhaltungen:
- EP-A- 1 276 123
- US-A- 2 738 758
- US-A- 5 952 912
- US-A- 6 091 033

## Beschreibung

Die Erfindung betrifft ein Bedienelement zur Erzeugung elektrischer Stellsignale nach dem Oberbegriff des Anspruches 1.

Derartige Bedienelemente werden beispielsweise in Kraftfahrzeugen eingesetzt. In der nicht vorveröffentlichten Patentanmeldung DE 10212992.4 ist eine besondere Ausführungsform eines solchen Bedienelementes beschrieben. Es dient zur Einstellung des Temperatursollwertes an einer Kraftfahrzeugklimaanlage. Durch die Verwendung von Wälzelementen zwischen der Handhabe und dem feststehenden Innenteil wird eine annähernd spielfreie Lagerung der Handhabe erzielt, was den Bedienkomfort erhöht. Da die Wälzelemente nicht, wie bei Standardausführungen üblich, in einem eigenen Wälzlager angeordnet sind, sondern das Innenteil und die Handhabe des Bedienelementes die Funktion von Innen- und Außenring inklusive der Läuferbahnen eines Wälzlagers übernehmen, ist eine sehr kompakte Bauform möglich.

Die US-A-6 091 033 zeigt ein Bedienelement mit mehreren drehbaren Handhaben. Die US-A-5 952 912 beschreibt ein Potentiometer mit kugelgelagertem Bedienelement, wobei die Kugeln die Schleifer ersetzen. Die US-A-2 738 758 beschreibt wiederum ein Bedienelement mit mehreren drehbaren Handhaben, während die EP 1 276 123 A1 ein Bedienelement zur Erzeugung inkrementaler elektrischer Signale zeigt.

Aufgabe der vorliegenden Erfindung ist es, ein Bedienelement zur Erzeugung inkrementaler Signale mit einer erweiterten Funktionalität anzugeben.

Diese Aufgabe wird mit einem Bedienelement gemäß Patentanspruch 1 gelöst.

Ein Merkmal der Erfindung ist, dass mehrere Handhaben mittels Wälzelementen um jeweils ein Innenteil gelagert werden, so dass mit dem resultierenden Bedienelement eine der Anzahl der Handhaben entsprechende Zahl von Stellsignalen erzeugt werden kann. Jede einzelne Handhabe trägt auf ihrer zum zugehörigen Innenteil zeigenden Seite eine Nut, die als eine Hälfte einer Läuferbahn für Wälzelemente dient. Damit fungiert jede der Handhaben gleichzeitig als ein Außenring eines Wälzlagers. In den äußeren, in Richtung der Handhaben zeigenden Umfang der feststehenden Innenteile sind die zugehörigen zweiten Hälften der Läuferbahnen eingebracht, d.h. je Innenteil jeweils ein sogenannter Innenring. Die einzelnen Innenteile sind mechanisch miteinander verbunden und entlang einer Achse angeordnet. Auf diese Weise entsteht ein Bedienteil, welches die Auswahl mehrer Funktionen bzw. die Einstellung mehrerer Funktionswerte erlaubt, platzsparend ist und einen hohen Bedienkomfort durch annähernd spielfreie Lagerung der Handhaben aufweist.

Weitere erfindungsgemäße Merkmale sehen vor, dass unterhalb einer jeden Handhabe eine Leiterplatine angebracht ist, welche jeweils einen Schalter trägt. Ein solcher Schalter kann bidirektional betätigt werden und ist unter der englischen Bezeichnung "detector switch" bekannt. Er dient der Erzeugung eines inkrementalen elektrischen Signals, indem er durch einen über ihn hinweggleitenden Gegenstand kurzzeitig geschlossen wird. Mittels dieses Schalters kann ein einzustellender Funktionswert ermittelt werden. Dazu muss an der Handhabe mindestens ein starrer Zapfen zur Betätigung des Schalter angebracht sein, so dass bei jeder Umdrehung der Handhabe einmal der Schalter geschlossen wird. Je größer die Anzahl der auf der Handhabe verteilten Zapfen ist, desto mehr Inkremente pro Umdrehung erhält man. Anstelle der Zapfen können auch Querrippen in die Handhaben eingebracht werden, welche dann nicht nur zur Betätigung des Schalters sondern gleichzeitig zur Stabilisierung und Lichtabschottung dienen, ähnlich wie beim Innenteil.

In einer bevorzugten Ausgestaltung der Erfindung sind die mehreren Handhaben um ein einziges, feststehendes Innenteil gelagert. Dieses einzige Innenteil trägt alle Innenringe, d.h. in den äußeren in Richtung der Handhaben zeigenden Umfang des Innenteils sind entsprechend der Anzahl der Handhaben mehrere Läuferbahnen eingebracht. Die Handhaben sind entlang der Längsachse des einzigen, feststehenden Innenteils verteilt. Da das Innenteil einstückig ausgeführt ist, ist es vorteilhafterweise in einem einzigen Verfahrensschritt herstellbar. Ein Kunststoffinnenteil kann beispielsweise einfach spritzgegossen werden.

Die Innenteile bzw. das einzige Innenteil können in gerader Zylinderform ausgeführt sein und mindestens zwei gleichgroße, kreisringförmige Handhaben tragen. Ergonomisch vorteilhafter ist eine Ausführung mit Handhaben, die unterschiedliche Außenabmessungen, also im Fall der Kreisringe unterschiedliche Außendurchmesser, aufweisen. Die Handhaben unterscheiden sich dann sowohl optisch als auch haptisch deutlich voneinander. Da durch jede der Handhaben ein elektrisches Stellsignal erzeugt werden soll, ist es außerdem günstig, auch die Innendurchmesser der Handhaben unterschiedlich groß zu wählen, so dass sich die Handhaben in Richtung der Längsachse des Bedienteils gesehen nicht vollständig überdecken und damit Platz für die Anbringung von elektrischen Übertragungselementen bieten.

Unterschiedliche Innendurchmesser der Handhaben sind gleichzusetzen mit unterschiedlichen Außendurchmessern der Innenteile. Für das einzige Innenteil bedeutet dies, dass es in Form einer abgesetzten Welle ausgeführt ist, also als Aneinanderreihung von Zylindern mit entsprechend unterschiedlichen Außendurchmessern. Bevorzugt ist dabei eine Ausführung, bei der das einzige Innenteil aus hohlzylinderförmigen Teilelementen aufgebaut ist, die konzentrisch um die Drehachse des Innenteils angeordnet sind. Die Teilelemente werden zur Drehachse hin zwangsläufig immer höher, um gerade die Form der abgesetzten Welle zu ergeben. Jeweils zwei der Teilelemente sind über Querrippen bzw. -stege verbunden, wodurch das Innenteil eine stabile Form erhält. Diese Querrippen bieten den zusätzlichen Vorteil, dass sie gleichzeitig zur Lichtabschottung dienen. Und zwar können die einzelnen Handhaben und auch das einzige Innenteil einen Symbolträger zur Darstellung von auszuwählenden Funktionen bzw. Funktionswerten tragen. Diese Symbolträger enthalten einzelne Symbole, welche bevorzugt aus dem Inneren des Bedienelementes heraus beleuchtet werden. Um zu verhindern, dass Streulicht auf nicht zu beleuchtende Symbole bzw. übrige Teile des Bedienelementes fällt, müssen im Bedienelement eigentlich spezielle Wände zur Lichtabschottung vorgesehen sein. Diese können jedoch bei dem einzigen Innenteil aufgrund der vorhandenen Querrippen entfallen. Ist das Bedienteil mit mehreren Innenteilen ausgeführt, kommt neben den Handhaben ausschließlich das in Richtung des Bedieners zeigende, also entlang der Längsachse des Bedienteils außen sitzende, Innenteil als Symbolträger in Frage. Die Lichtabschottungen können in dem Fall durch Querrippen innerhalb der Handhaben realisiert werden.

Das Bedienelement besteht bevorzugt vollständig aus Kunststoff. Es ist dadurch nicht nur leicht und preiswert, sondern auch ohne aufwändige Montage komplett im Spritzgussverfahren herstellbar. In einer weiteren Ausführungsform sind die Wälzelemente aus einem anderen Material als Kunststoff gefertigt, insbesondere Glas, Stahl oder Keramik.

Bei einer besonders kompakten Ausführung des Bedienelementes ist außerdem vorgesehen, dass nur eine einzige Leiterplatine unterhalb des gesamten Bedienelementes angebracht ist. Diese Leiterplatine trägt für jede Handhabe einen eigenen Schalter. Im Fall der kreisringförmigen Handhaben und des aus hohlzylinderförmigen Teilelementen bestehenden einzigen Innenteils sind dann die Schalter auf der Leiterplatine entlang eines Radius, ausgehend von der Drehachse des Innenteils, verteilt.

Da die Handhaben und damit die Zapfen in dieser Ausführung unterschiedlich weit von der einzigen Leiterplatine entfernt sind, weisen die Schalter unterschiedlich hohe Betätiger auf.

Das erfindungsgemäße Bedienelement ist besonders vorteilhaft einsetzbar zur Einstellung von Funktionssollwerten einer Klimaanlage. So kann eine der Handhaben zur Temperatureinstellung dienen, eine weitere zur Wahl der Luftverteilung und eine dritte zur Änderung der Gebläseeinstellung. Das Bedienelement ist aber ebenso geeignet zur Bedienung anderer elekronischer Komponenten in einem Fahrzeug oder für Geräte der Haushalt- bzw. Unterhaltungselektronik.

Eine genauere Beschreibung einer bevorzugten Ausführungsform der Erfindung erfolgt nachfolgend anhand der Zeichnung. Es zeigen:
- Fig. 1: einen Querschnitt durch ein Bedienelement mit drei Handhaben,
- Fig. 2: eine Schrägsicht auf das Innenteil des Bedienelementes aus Fig. 1,
- Fig. 3: einen Querschnitt eines Bedienelementes mit drei Handhaben und Schaltern,
- Fig. 4: eine Sicht von unten auf eine Handhabe mit Querrippen,
- Fig. 5: eine Schrägsicht auf das Innenteil des Bedienelementes aus Fig. 3,
- Fig. 6: eine Schrägsicht auf das Bedienelement aus Fig. 3 mit Symbolträger.

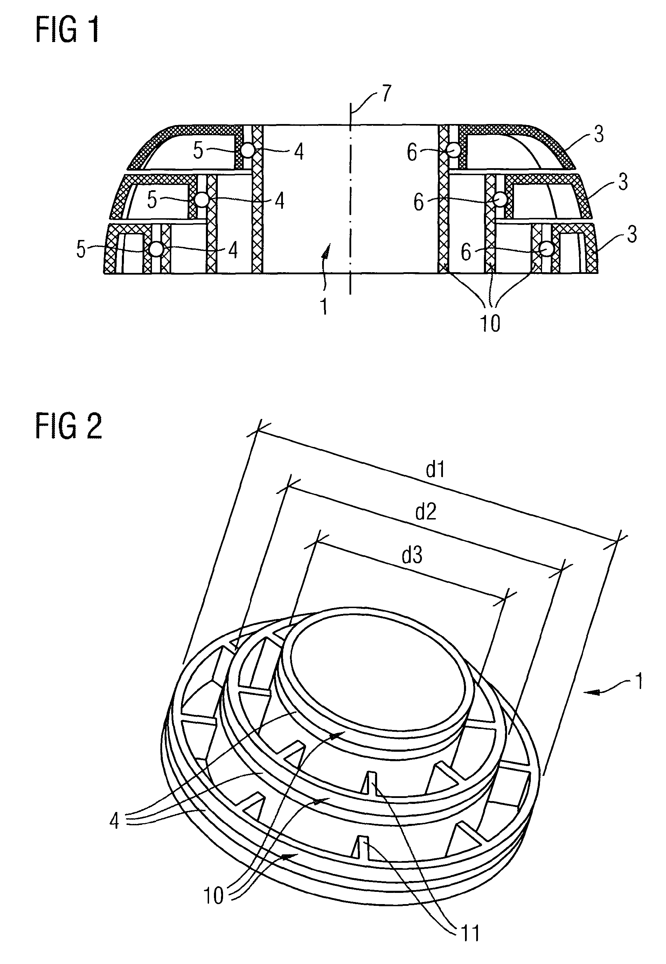

In Figur 1 ist das Schnittbild einer bevorzugten Ausbildung eines Bedienelementes mit drei Handhaben 3 zu sehen. Die Handhaben sind über die Wälzelemente 6 konzentrisch um die Drehachse 7 eines einzigen feststehenden Innenteils 1 gelagert. Die Wälzelemente 6 sind dabei zwischen je einem Außenring 5, welcher als Nut in jeweils einer Handhabe 3 ausgeführt ist, und je einem Innenring 4, angeordnet. Die Innenringe 4 sind als Nuten in das einzige Innenteil 1 eingelassen. Als Wälzelemente 6 sind in Fig. 1 Kugeln dargestellt. Die Handhaben 3 sind als Ringkörper ausgebildet, wobei sich sowohl ihre Innen- als auch ihre Außendurchmesser voneinander unterscheiden.

Das in Fig. 1 im Querschnitt zu sehende einzige Innenteil 1 des Bedienelementes ist in Fig. 2 in schräger Aufsicht abgebildet. Das Innenteil 1 ist in Form von drei hohlzylinderförmigen und konzentrisch angeordneten Teilelementen 10 ausgeführt, wobei zwischen jeweils zwei Teilelementen 10 über den Umfang verteilte Querrippen 11 vorgesehen sind. Die Innenringe 4 verlaufen als Nuten rings um die Außenflächen der Teilelemente 10. Entsprechend der Innendurchmesser der als Ringkörper ausgeformten Handhaben 3 besitzen die drei Teilelemente 10 dazu passende Außendurchmesser. Damit weichen auch die Kreisringdurchmesser d1, d2 und d3 der Innenringe 4 entsprechend voneinander ab.

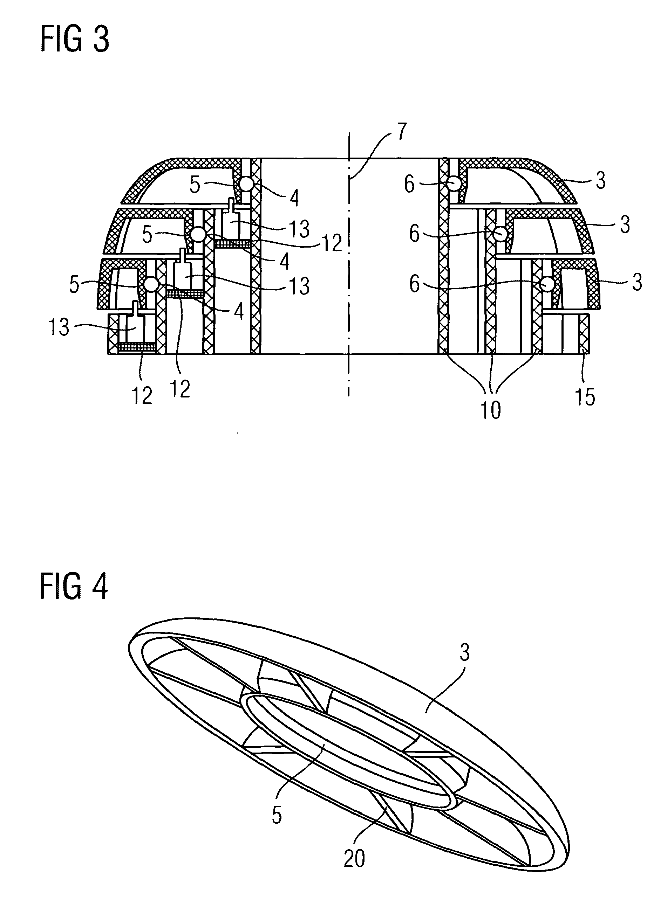

Aus Fig. 3 geht hervor, wie eine Signalerzeugung mit dem Bedienelement erfolgen kann. Unterhalb jeder Handhabe 3 ist an jeweils einer Stelle eine Leiterplatine 12 angebracht, auf der ein Schalter 13 sitzt. Im Inneren der Handhaben 3 befinden sich Querrippen 20 (s. Fig. 4), welche bei einer Drehbewegung der jeweiligen Handhabe 3 den Betätiger des Schalters 13 niederdrücken und damit den Schalter kurzzeitig schließen.

Fig. 4 zeigt die Sicht von unten auf eine der Handhaben 3, wobei mehrere Querrippen 20 zur Betätigung des Schalters 13 zu sehen sind. Gut zu erkennen ist der Außenring 5, welcher als Nut ausgeführt ist.

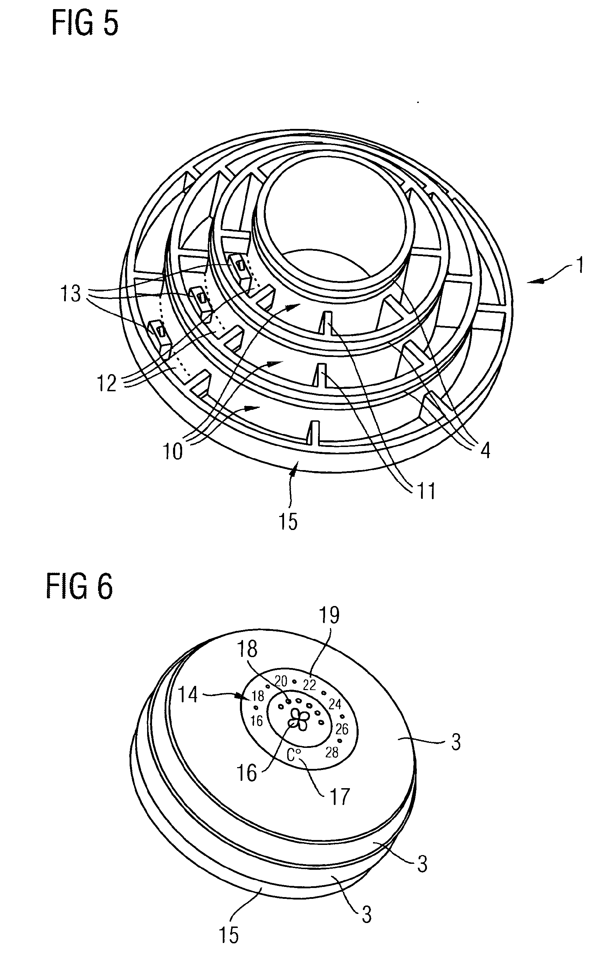

Die Anordnung der Leiterplatinen 12 und der Schalter 13 aus Fig. 3 geht auch aus der alleinigen Darstellung des Innenteils 1 in Fig. 5 hervor. Das Bedienelement aus den Fig. 1 und 2 wurde in den Fig. 3, 5 und 6 um einen vierten Hohlzylinder 15 erweitert, um auch unterhalb der am weitesten außen und unten befindlichen Handhabe 3 eine Leiterplatine 12 anbringen zu können.

In Fig. 6 ist eine Schrägsicht des Bedienelementes aus Fig. 3 dargestellt. Das Innenteil 1 trägt auf seiner Oberseite einen beleuchtbaren Symbolbereich 14, auf dem u.a. ein ein Temperatursymbol 17 sowie ein Symbol für ein Gebläse 16 zu erkennen sind. Über eine der Handhaben 3 kann demnach eine Temperatur und über eine zweite Handhabe 3 eine Gebläseeinstellung variiert werden, wie es z.B. bei Fahrzeugklimaanlagen üblich ist. Je nach eingestellter Temperatur wird einer der Temperaturwerte 19 und je nach eingestelltem Gebläsewert eine bestimmte Anzahl von Skalenpunkten 18 beleuchtet sein. Zusätzlich zu dem Symbolbereich 14 können noch weitere Symbole auf den Außenseiten der Handhaben 3 aufgebracht sein.

## Patentansprüche

1. Bedienelement zur Erzeugung elektrischer Stellsignale mit mindestens zwei drehbar um jeweils ein feststehendes Innenteil gelagerten Handhaben (3), **dadurch gekennzeichnet, dass** die Handhaben (3) mittels Wälzelementen (6) um jeweils ein feststehendes Innenteil drehbar gelagert sind, wobei die Wälzelemente (6) zwischen jeweils einem Innen- (4) und einem Außenring (5) angeordnet sind und wobei jeweils ein Außenring (5) Bestandteil einer Handhabe (3) ist und jeweils ein Innenring (4) Bestandteil eines Innenteils ist, unterhalb jeder Handhabe (3) eine Leiterplatine (12) angeordnet ist, auf der ein Schalter (13) zur Erzeugung inkrementaler elektrischer Signale aufgebracht ist, und die direkt über der Leiterplatine (12) befindliche Handhabe (3) Zapfen oder im Inneren befindliche Querrippen (20) aufweisen, die während einer Drehbetätigung der Handhabe (3) den Schalter (13) auslösen.

2. Bedienelement nach Anspruch 1, **dadurch gekennzeichnet, dass** die mindestens zwei Handhaben (3) drehbar um ein einziges feststehendes Innenteil (1) gelagert sind und dass die Innenringe (4) Bestandteil des einzigen Innenteils (1) sind.

3. Bedienelement nach einem der vorhergehenden Ansprüche, **dadurch gekennzeichnet, dass** die mindestens zwei Handhaben (3) unterschiedliche Außenabmessungen aufweisen.

4. Bedienelement nach einem der vorhergehenden Ansprüche, **dadurch gekennzeichnet, dass** die mindestens zwei Innenringe (4) konzentrisch um eine Drehachse (7) angeordnet sind und unterschiedliche Kreisringdurchmesser (d1, d2) aufweisen.

5. Bedienelement nach Anspruch 2, **dadurch gekennzeichnet, dass** die mindestens zwei Innenringe (4) zu jeweils einem in Hohlzylinderform ausgeführten Teilelement (10) des einzigen Innenteils (1) gehören, wobei die Teilelemente (10) unterschiedliche Durchmesser aufweisen, konzentrisch um die Drehachse (7) des einzigen Innenteils (1) ausgeführt sind und zwischen einem Teilelement (10) mit größerem Durchmesser und einem Teilelement (10) mit nächstkleinerem Durchmesser Querrippen (11) vorgesehen sind.

6. Bedienelement nach einem der vorhergehenden Ansprüche, **dadurch gekennzeichnet, dass** das gesamte Bedienelement aus Kunststoff besteht.

7. Bedienelement nach einem der vorhergehenden Ansprüche 1 bis 5, **dadurch gekennzeichnet, dass** die Wälzelemente (6) aus Glas bestehen.

8. Bedienelement nach einem der vorhergehenden Ansprüche, **dadurch gekennzeichnet, dass** mindestens eine der Handhaben (3) einen Symbolträger enthält.

9. Bedienelement nach einem der vorhergehenden Ansprüche, **dadurch gekennzeichnet, dass** eines oder mehrere der Innenteile einen Symbolträger (14) enthält.

10. Bedienelement nach einem der vorhergehenden Ansprüche 8 oder 9, **dadurch gekennzeichnet, dass** mindestens einer der Symbolträger durch eine Lichtquelle beleuchtbar ist.

11. Bedienelement nach einem der vorhergehenden Ansprüche, **dadurch gekennzeichnet, dass** das Bedienelement zur Bedienoberfläche einer Kraftfahrzeugkomponente, insbesondere einer Fahrzeugklimaanlage, gehört.

## Claims

1. Operating element for generating electrical control signals having at least two control dials (3) mounted in each case about a fixed inner part, **characterized in that** the control dials (3) are rotatably mounted in each case about a fixed inner part by means of roller elements (6), wherein the roller elements (6) are arranged between an inner (4) and an outer ring (5) in each case, and wherein an outer ring (5) is part of a control dial (3) in each case and an inner ring (4) is part of an inner part in each case, a circuit board (12) being arranged below each control dial (3), on which circuit board a switch (13) for generating incremental electrical signals is disposed, and the control dial (3) located directly over the circuit board (12) having lugs or transverse ribs (20) situated in the interior which actuate the switch (13) during a rotary movement of the control dial (3).

2. Operating element according to Claim 1, **characterized in that** the at least two control dials (3) are mounted rotatably about a single fixed inner part (1), and **in that** the inner rings (4) are part of the single inner part (1).

3. Operating element according to one of the preceding claims, **characterized in that** the at least two control dials (3) have different outer dimensions.

4. Operating element according to one of the preceding claims, **characterized in that** the at least two inner rings (4) are arranged concentrically about an axis of rotation (7) and have different circular ring diameters (d1, d2).

5. Operating element according to Claim 2, **characterized in that** the at least two inner rings (4) belong in each case to a partial element (10) of the single inner part (1), which element has a hollow cylindrical form, wherein the partial elements (10) have different diameters, are formed concentrically about the axis of rotation (7) of the single inner part (1), and transverse ribs (11) are provided between a partial element (10) having a greater diameter and a partial element (10) having the next smaller diameter.

6. Operating element according to one of the preceding claims, **characterized in that** the entire operating element is made of plastic.

7. Operating element according to one of the preceding Claims 1 to 5, **characterized in that** the roller elements (6) are made of glass.

8. Operating element according to one of the preceding claims, **characterized in that** at least one of the control dials (3) includes a symbol carrier.

9. Operating element according to one of the preceding claims, **characterized in that** one or more of the inner parts includes a symbol carrier (14).

10. Operating element according to one of the preceding Claims 8 or 9, **characterized in that** at least one of the symbol carriers can be illuminated by a light source.

11. Operating element according to one of the preceding claims, **characterized in that** the operating element belongs to the user interface of a motor vehicle component, in particular to a vehicle air-conditioning system.

## Revendications

1. Organe de commande destiné à produire des signaux électriques de réglage et comportant au moins deux manettes (3) montées en rotation chacune autour d'une pièce intérieure fixe, **caractérisé par le fait que** les manettes (3) sont montées, au moyen d'éléments à roulement (6), en rotation chacune autour d'une pièce intérieure fixe, où les éléments à roulement (6) sont disposés chacun entre une bague intérieure (4) et une bague extérieure (5) et où, dans chaque cas, une bague extérieure (5) fait partie d'une manette (3) et, dans chaque cas, une bague intérieure (4) fait partie d'une pièce intérieure, où, au-dessous de chaque manette (3), est disposée une platine à circuits imprimés (12) sur laquelle est monté un commutateur (13) destiné à produire des signaux électriques incrémentiels et où la manette (3) se trouvant directement au-dessus de la platine à circuits imprimés (12) comporte des tétons ou des nervures transversales (20) se trouvant à l'intérieur, lesquels déclenchent le commutateur (13) lors d'un mouvement de rotation de la manette (3).

2. Organe de commande selon la revendication 1, **caractérisé par le fait que** les au moins deux manettes (3) sont montées en rotation autour d'une seule pièce intérieure fixe (1) et que les bagues intérieures (4) font partie de la seule pièce intérieure fixe (1).

3. Organe de commande selon l'une des revendications précédentes, **caractérisé par le fait que** les au moins deux manettes (3) ont des dimensions extérieures différentes.

4. Organe de commande selon l'une des revendications précédentes, **caractérisé par le fait que** les au moins deux bagues intérieures (4) sont disposées d'une façon concentrique autour d'un axe de rotation (7) et ont des diamètres (d1, d2) différents.

5. Organe de commande selon la revendication 2, **caractérisé par le fait que** les au moins deux bagues intérieures (4) font partie, dans chaque cas, d'un élément partiel (10), en forme de cylindre creux, de l'unique pièce intérieure (1), où les éléments partiels (10) ont des diamètres différents, sont concentriques autour de l'axe de rotation (7) de l'unique pièce intérieure (1) et où des nervures transversales (11) sont prévues entre un élément partiel (10) ayant un diamètre plus grand et un élément partiel (10) ayant le diamètre immédiatement plus petit.

6. Organe de commande selon l'une des revendications précédentes, **caractérisé par le fait que** l'ensemble de l'organe de commande est en matière plastique.

7. Organe de commande selon l'une des revendications précédentes 1 à 5, **caractérisé par le fait que** les éléments à roulement (6) sont en verre.

8. Organe de commande selon l'une des revendications précédentes, **caractérisé par le fait que** au moins l'une des manettes (3) comporte un support pour des symboles.

9. Organe de commande selon l'une des revendications précédentes, **caractérisé par le fait que** l'une ou plusieurs des pièces intérieures comporte un support (14) pour des symboles.

10. Organe de commande selon l'une des revendications précédentes 8 ou 9, **caractérisé par le fait que** au moins l'un des supports pour des symboles peut être éclairé par une source lumineuse.

11. Organe de commande selon l'une des revendications précédentes, **caractérisé par le fait que** l'organe de commande fait partie de la surface de commande d'un constituant de véhicule automobile, notamment d'un système de climatisation de véhicule.
